# EUROPÄISCHE PATENTANMELDUNG

(11) **EP 2 604 949 A1**
(43) Veröffentlichungstag der Anmeldung: **19.06.2013**
(21) Anmeldenummer: 11009860.5
(22) Anmeldetag: 14.12.2011
(51) Int. Cl.: F24J 2/52, H01L 31/042

(54) **Haltevorrichtung zur Halterung eines Photovoltaikmoduls an einer Montageschiene**

(71) Anmelder: Renusol GmbH, 51063 Köln (DE)
(72) Erfinder: Zschoch, Stefan, 10367 Berlin (DE); Kübsch, Michael, 16321 Bernau (DE)
(74) Vertreter: Graf von Stosch, Andreas

(57) **Zusammenfassung**

Die Erfindung betrifft eine Haltervorrichtung (10) zur Halterung eines Photovoltaikmoduls (70) an einer Montageschiene (50), wobei die Haltervorrichtung (10) ein erstes Halterelement mit einer ersten Haupterstreckungsrichtung (H1) und ein zweites Halterelement mit einer zweiten Hauptersteckungsrichtung (H2) umfasst, sowie eine die beiden Halterelemente verbindende Anzugsvorrichtung, welche ausgebildet ist, bei Betätigung die beiden Halterelemente relativ zueinander zu bewegen, wobei das erste Halterelement an einem in der ersten Haupterstreckungsrichtung (H1) dem zweiten Halterelement entfernten Längsende wenigstens einen zur Kopplung mit einer Montageschiene (50) geeigneten ersten Kopplungsabschnitt aufweist, wobei das zweite Halterelement an einem in der zweiten Haupterstreckungsrichtung (H2) dem ersten Halterelement entfernten Längsende wenigstens einen zur Kopplung mit einem Photovoltaikmodul (70) geeigneten zweiten Kopplungsabschnitt (46) aufweist, und wobei durch Betätigung der Anzugsvorrichtung die Haltervorrichtung (10) von einem Ausgangszustand in einen Endmontagezustand überführbar ist, wobei die Haltervorrichtung (10) ferner wenigstens ein zwischen den beiden Halterelementen elastisch wirkendes Federelement umfasst, welches ausgebildet ist, im Ausgangszustand das erste Halterelement relativ zu dem zweiten Halterelement derart zu verkippen, dass die erste Haupterstreckungsrichtung (H1) wenigstens um einen vorbestimmten Winkelwert von der zweiten Haupterstreckungsrichtung (H2) abweicht, wohingegen im Endmontagezustand die erste Haupterstreckungsrichtung (H1) und die zweite Haupterstreckungsrichtung (H2) im Wesentlichen identisch sind.

## Beschreibung

Die vorliegende Erfindung betrifft eine Haltervorrichtung zur Halterung eines Photovoltaikmoduls an einer Montageschiene, wobei die Haltervorrichtung ein erstes Halterelement mit einer ersten Haupterstreckungsrichtung und ein zweites Halterelement mit einer zweiten Hauptersteckungsrichtung umfasst, sowie eine die beiden Halterelemente verbindende Anzugsvorrichtung, welche ausgebildet ist, bei Betätigung die beiden Halterelemente relativ zueinander zu bewegen, wobei das erste Halterelement an einem in der ersten Haupterstreckungsrichtung dem zweiten Halterelement entfernten Längsende wenigstens einen zur Kopplung mit einer Montageschiene geeigneten ersten Kopplungsabschnitt aufweist, wobei das zweite Halterelement an einem in der zweiten Haupterstreckungsrichtung dem ersten Halterelement entfernten Längsende wenigstens einen zur Kopplung mit einem Photovoltaikmodul geeigneten zweiten Kopplungsabschnitt aufweist, und wobei durch Betätigung der Anzugsvorrichtung die Haltervorrichtung von einem Ausgangszustand in einen Endmontagezustand überführbar ist.

Eine derartige Haltervorrichtung ist bereits aus der WO 2008/119316 A1 bekannt. Das erste Halterelement, welches in der WO 2008/119316 A1 als Klemmteilträger bezeichnet wird, ist mit einem Kopfteil und zwei Seitenschenkeln im Wesentlichen U-förmig ausgebildet. An den freien Längsenden der U-Form weisen die beiden Seitenschenkel als ersten Kopplungsabschnitt jeweils einen nach innen gerichteten, hakenartigen Vorsprung auf. Diese Vorsprünge sind geeignet, mit entsprechenden, nach außen gerichteten, hakenartigen Vorsprüngen einer Montageschiene, die als Profilformteil ausgebildet ist, in Eingriff zu stehen. Zur Herstellung dieses Eingriffs kann das erste Halterelement entweder in Längserstreckungsrichtung der Montageschiene auf diese aufgeschoben werden, oder es kann orthogonal zu dieser Richtung auf die Montageschiene zu bewegt werden, wobei der Eingriff dann in der Art einer Klick-verbindung entsteht.

Ferner umfasst die in der WO 2008/119316 A1 offenbarte Haltervorrichtung als zweites Halterelement ein Klemmteil, welches als Doppelwinkelprofil mit in entgegengesetzte Richtung weisenden Schenkeln und mit einem diese Schenkel verbindenden Steg ausgebildet ist, wobei der oben liegende Schenkel über einen Rahmenabschnitt eines Solarmoduls greift und der untere Schenkel höhenverstellbar in dem Klemmteilträger geführt angeordnet ist. Zur Höhenverstellung des Klemmteils ist ein Gewindebolzen in einem Innengewinde in dem unteren Schenkel des Klemmteils verdrehbar angeordnet und stützt sich am Kopfteil des Klemmteilträgers ab.

Der Klemmteilträger weist in einer Schnittebene orthogonal zur Längserstreckungsrichtung der Montageschiene im Wesentlichen die Form eines schiefen Parallelogramms auf. Hierdurch bedingt schließen eine Stirnfläche des Rahmenabschnitts des zu haltenden Solarmoduls und eine zu der Stirnfläche des Rahmenabschnitts weisende Seitenebene des Klemmteilträgers einen Winkel ein. Laut Beschreibung der WO 2008/119316 A1 führt dies dazu, dass das zum Verspannen in den Klemmteilträger eingesetzte Klemmteil ebenfalls in einer geneigten Position zur Stirnfläche des Rahmenabschnitts steht. Beim Verspannen erfolgt dann nicht nur eine Verschiebung des Klemmteils relativ zu dem Klemmteilträger in Höhenrichtung, d.h. orthogonal zur Längserstreckungsrichtung der Montageschiene, sondern das Klemmteil bewegt sich zudem auch noch relativ zu dem Klemmteilträger auf die Stirnfläche des Rahmenabschnitts zu. Beim Erreichen einer Endstellung des Verspannvorgangs ist dann der Verbindungssteg des Klemmteils im Wesentlichen parallel zu der Stirnfläche des Rahmenabschnitts ausgerichtet. Hierdurch soll eine gute Auf- bzw. Anlage des Klemmteils am Rahmen des Solarmoduls erzielt werden, selbst dann, wenn kein weiteres Solarmodul auf der anderen Seite der Haltervorrichtung dieser als Gegenlager dient.

Die in der WO 2008/119316 A1 offenbarte Haltervorrichtung weist jedoch verschiedene Nachteile auf. So nähert sich zwar beim Verspannen der Verbindungssteg des Klemmteils der Stirnfläche des Rahmenabschnitts des zu haltenden Photovoltaikmoduls an, doch verbleibt der Klemmteilhalter, insbesondere sein Fußabschnitt, wo er mit der Montageschiene gekoppelt ist, relativ weit von der Stirnfläche des Rahmenabschnitts beabstandet. Somit kann der Rahmenabschnitt nicht an dem Klemmteilhalter anliegen, um von diesem, etwa auf einem abschüssigen Dach, mit gestützt zu werden.

Ferner schleift beim Verspannen das sich relativ zu dem Klemmteilhalter bewegende Klemmteil entlang der der Stirnfläche des Rahmenabschnitts zugewandten, oberen Kante des Klemmteilhalters. Insbesondere kurz vor dem Erreichen der Endstellung, wenn bereits hohe Kräfte über die Halteranordnung übertragen werden, kann dies zu einem starken Verschleiß an diesen beiden Teile führen.

Ein weiterer Nachteil dieser Haltervorrichtung liegt darin, dass auf Grund der schiefen Form des Klemmteilhalters der Kraftfluss in der Haltervorrichtung nicht im Wesentlichen geradlinig von oben nach unten, d.h. von dem oberen zweiten Kopplungsabschnitt, an dem das Klemmteil in Eingriff mit dem Rahmenabschnitt des Photovoltaikmoduls steht, bis zu dem unteren ersten Kopplungsabschnitt, an dem der Klemmteilhalter in Eingriff mit der Montageschiene steht, geführt werden kann. Vielmehr weist der Kraftfluss in der Endstellung nach dem Verspannen wenigstens eine "Knickstelle" auf, so dass die Einzelteile entsprechend stärker zu dimensionieren sind.

Es ist daher Aufgabe der vorliegenden Erfindung, eine eingangs genannte Haltervorrichtung bereitzustellen, welche die zuvor genannten Nachteile nicht, oder zumindest nicht im gleichen Umfang aufweist. Insbesondere soll eine Haltervorrichtung bereitgestellt werden, die eine gute Auf- bzw. Anlage an dem Photovoltaikmodul auch dann sicherstellt, wenn kein weiteres Solarmodul auf der anderen Seite der Haltervorrichtung dieser als Gegenlager dient, wobei die Haltervorrichtung zugleich mit wenig Materialeinsatz einen sicheren Halt gewährleisten können soll.

Diese Aufgabe wird nach einem ersten Aspekt der vorliegenden Erfindung durch die eingangs genannte Haltervorrichtung gelöst, welche ferner wenigstens ein zwischen den beiden Halterelementen elastisch wirkendes Federelement umfasst, welches ausgebildet ist, im Ausgangszustand das erste Halterelement relativ zu dem zweiten Halterelement derart zu verkippen, dass die erste Haupterstreckungsrichtung wenigstens um einen vorbestimmten Winkelwert von der zweiten Haupterstreckungsrichtung abweicht, wohingegen im Endmontagezustand die erste Haupterstreckungsrichtung und die zweite Haupterstreckungsrichtung im Wesentlichen identisch sind.

Mit dem Begriff "Ausgangszustand" soll in der vorliegenden Erfindung ein Zustand verstanden werden, in dem zwar der wenigstens eine erste Kopplungsabschnitt bereits in Kopplungseingriff mit der Montageschiene und der wenigstens eine zweite Kopplungsabschnitt in Kopplungseingriff mit dem Photovoltaikmodul steht, in dem jedoch noch keine nennenswerten Kräfte zwischen diesen Kopplungsabschnitten über die Haltervorrichtung übertragen werden. Im "Endmontagezustand" ist die Haltervorrichtung hingegen durch ihre Anzugsvorrichtung derart angezogen, dass das Photovoltaikmodul fest gegen die Montageschiene gedrückt wird. Sofern ein Halterelement eine im Wesentlichen U-förmige Gestalt aufweist, so ist unter seiner "Haupterstreckungsrichtung" eine zu den beiden Schenkeln der U-Form im Wesentlichen parallele Richtung zu verstehen. Im Endmontagezustand können die erste und die zweite Haupterstreckungsrichtung in einer zu der Längserstreckungsrichtung der Montageschiene im Wesentlichen orthogonalen Ebene liegen.

Durch das erfindungsgemäße Vorsehen des wenigstens einen zwischen den beiden Halterelementen elastisch wirkenden Federelements, kann, wie auch bei der in der WO 2008/119316 A1 offenbarten Ausführungsform, sichergestellt werden, dass die Haltervorrichtung beim Anziehen nicht von dem zu haltenden Photovoltaikmodul wegrutschen kann, selbst dann, wenn kein weiteres Photovoltaikmodul auf der anderen Seite des Halterelements vorhanden ist, welches ansonsten als Gegenlager dienen könnte. Durch das wenigstens eine Federelement, wird nämlich bereits ein gewisse Vorspannung erzeugt, welche von dem ersten Kopplungsabschnitt auf die Montageschiene und von dem zweiten Kopplungsabschnitt auf das Photovoltaikmodul wirkt, so dass durch Reibkräfte an diesen Kopplungsabschnitten ein Wegrutschen der Haltervorrichtung von dem Photovoltaikmodul während des Anziehens der Anzugsvorrichtung verhindert wird.

In einer Seitenansicht auf die Haltervorrichtung, in einer in der Ebene des zu haltenden Photovoltaikmoduls liegenden und zu der Längserstreckungsrichtung der Montageschiene orthogonalen Richtung, können die erste Haupterstreckungsrichtung und die zweite Haupterstreckungsrichtung der beiden Halterelemente der erfindungsgemäßen Haltervorrichtung durch das wenigstens eine Federelement im Ausgangszustand einen "Knickstelle" aufweisen, wobei der wenigstens eine erste Kopplungsabschnitt des ersten Halterelements dem Photovoltaikmodul unmittelbar benachbart sein kann und der wenigstens eine zweite Kopplungsabschnitt des zweiten Kopplungselements mit dem Photovoltaikmodul in Kopplungseingriff steht, während ein Zwischenabschnitt der Haltervorrichtung zwischen dem wenigstens einen ersten und dem wenigstens einen zweiten Kopplungsabschnitt von dem Photovoltaikmodul beabstandet sein kann. Wird die Anzugsvorrichtung dann angezogen, um in den Endmontagezustand überzugehen, so nähert sich dieser Zwischenabschnitt der Haltervorrichtung dem Photovoltaikmodul immer weiter an. Dabei verkleinert sich der "Knick" zwischen den Haupterstreckungsrichtungen der beiden Halterelemente immer mehr, bis die erste und die zweite Haupterstreckungsrichtung im Wesentlichen miteinander übereinstimmen. Somit kann ein im Wesentlichen gerader Kraftfluss von einem Kopfbereich, d.h. einem Bereich des wenigstens einen zweiten Kopplungsabschnitts, zu einem Fußbereich, d.h. einem Bereich des wenigstens einen ersten Kopplungsabschnitts der Haltervorrichtung entstehen. Für die zuverlässige Kraftübertragung im Endmontagezustand kommen die Einzelteile der Haltervorrichtung daher mit vergleichsweise wenig Material aus.

Zudem kann die erfindungsgemäße Haltervorrichtung auch in ihrem Fußbereich an dem Photovoltaikmodul im Endmontagezustand problemlos anliegen, so dass das Photovoltaikmodul im bedingten Umfang auch in diesem Bereich gestützt wird. Insbesondere dann, wenn das wenigstens eine Federelement flächig ausgebildet ist, kann zudem auch der Verschleiß an dem mit dem wenigstens einem Federelement in Anlage stehenden Halterelement beim Anziehen der Haltervorrichtung gering gehalten werden.

Ähnlich wie bei dem oberen Schenkel des Klemmteils der in der WO 2008/119316 A1 offenbarten Ausführungsform kann vorgesehen sein, dass der zweite Kopplungsabschnitt einen Haltevorsprung umfasst, welcher sich in einer zu der zweiten Haupterstreckungsrichtung im Wesentlichen orthogonalen Ebene in Richtung auf das zu haltende Photovoltaikmodul hin erstreckt, und welcher angepasst ist, das Photovoltaikmodul, zumindest im Endmontagezustand, gegen die Montageschiene zu drücken. Der Haltevorsprung kann dabei vorzugsweise flächig ausgebildet sein, um das Photovoltaikmodul, bzw. einen Rahmenabschnitt davon, zwischen sich und der Montageschiene, auf welcher das zu haltende Photovoltaikmodul aufliegt, besonders schonend einzuklemmen.

Wie zuvor bereits beschrieben, kann das wenigstens eine Federelement derart ausgebildet sein, dass im Ausgangszustand der Haltevorsprung in Richtung auf das zu haltende Photovoltaikmodul hin gekippt ist. Somit kann sichergestellt werden, dass der wenigstens eine zweite Kopplungsabschnitt der Haltervorrichtung mit dem zu haltenden Photovoltaikmodul bereits im Ausgangszustand in Kopplungseingriff ist, wobei das wenigstens eine Federelement für eine gewisse Vorspannung sorgt.

Die Anzugsvorrichtung kann mit besonders einfachen und kostengünstigen Mitteln realisiert werden, wenn sie einen Schraubbolzen und einen mit einem Außengewinde des Schraubbolzens in Gewindeeingriff stehenden Innengewindeabschnitt aufweist. Insbesondere kann vorgesehen sein, dass eines der beiden Halterelemente einen, vorzugsweise integral damit ausgebildeten, Aufnahmeabschnitt zum verdrehsicheren Aufnehmen einer den Innengewindeabschnitt aufweisenden Mutter umfasst, und dass das andere der beiden Halterelementen ein von dem Schraubbolzen durchsetztes Durchgangsloch aufweist.

Eine strukturell besonders stabile Form kann das erste Halterelement aufweisen, wenn es bei Betrachtung orthogonal zu einer ersten Bezugsebene, welche parallel zu der ersten Haupterstreckungsrichtung ist, im Wesentlichen U-förmig ausgebildet ist. Ebenso kann das zweite Halterelement bei Betrachtung orthogonal zu einer zweiten Bezugsebene, welche parallel zu der zweiten Haupterstreckungsrichtung ist, im Wesentlichen U-förmig ausgebildet sein. In diesem Fall kann im Endmontagezustand die erste Bezugsebene im Wesentlichen orthogonal zu der zweiten Bezugsebene ausgerichtet sein. Beispielsweise können die Schenkel des ersten Halterelements das zweite Halterelement weitgehende zwischen sich aufnehmen, oder umgekehrt, so dass die Anzugsvorrichtung nach außen im Wesentlichen geschützt ist und einen optisch ansprechenden Eindruck macht, ohne dass hierfür eine Muffe notwendig wäre, wie sie in der WO 2008/119316 A1 offenbart ist.

Das wenigstens eine Federelement kann im Wesentlichen flächig ausgebildet und mit dem restlichen ersten oder zweiten Halterelement derart beweglich verbunden sein, dass es sich im Endmontagezustand, anders als im Ausgangszustand, in einer zu der ersten bzw. zweiten Bezugsebene im Wesentlichen identischen oder parallelen Ebene erstreckt. Das wenigstens eine Federelement kann beispielsweise beim Anziehen der Anzugsvorrichtung entlang einer, vorzugsweise glatten, Gleitoberfläche des jeweiligen ersten oder zweiten Halterelements, mit dem es nicht verbunden ist, gleiten. Dabei federt das wenigstens eine Federelement während des Anziehens immer mehr ein, bis es im Endmontagezustand im Wesentlichen flach an der Gleitoberfläche anliegt. Falls das die Gleitoberfläche umfassende Halterelement eine im Wesentlichen U-förmige Konfiguration aufweist, kann die Gleitoberfläche zum Beispiel eine Oberfläche, vorzugsweise Innenoberfläche, von einem der beiden Schenkel der U-Form sein.

Um eine möglichst gleichmäßige, zwischen den beiden Halterelementen wirkende Vorspannkraft zu erhalten, wird ferner vorgeschlagen, falls das das wenigstens eine Federelement umfassende Halterelement im Wesentlichen U-förmig ausgebildet ist, dass jedem der beiden Schenkel des U-förmigen ersten oder zweiten Halterelements jeweils ein Federelement zugeordnet ist.

Im Hinblick auf eine besonders kostengünstige Fertigung, die mit wenigen Einzelteilen auskommt, wird vorgeschlagen, dass das wenigstens eine Federelement integral mit einem der beiden Halterelemente, vorzugsweise mit dem ersten Halterelement, verbunden ist. Insbesondere kann daran gedacht werden, das das wenigstens eine Federelement aufweisende Halterelement der beiden Halterelemente als metallisches Stanz-Biege-Teil auszubilden. Dabei ist es auf Grund der oben genannten Vorteile der vorliegenden Erfindung möglich, das Halterelement aus einem verhältnismäßig dünnen Blech zu bilden, also relativ wenig Material für die Fertigung zu verbrauchen.

Ein weiterer Nachteil der in der WO 2008/119316 A1 offenbarten Ausführungsform liegt darin, dass, wenn der Klemmteilträger auf die Montageschiene aufgeklickt wird, sich relativ große Bereiche der beiden Seitenschenkel des im Wesentlichen U-förmig ausgebildeten Klemmteilträgers verformen. Nicht nur bei der Ausführungsform gemäß der WO 2008/119316 A1, sondern auch bei anderen im Stand der Technik bekannten Ausführungsformen müssen die Schenkel eines U-förmigen Elements der Haltevorrichtung auseinander gespreizt werden, um eine Klickverbindung zwischen Haltevorrichtung und Montageschiene herstellen zu können. Beim Auseinanderspreizen der Schenkel wird das Material über einen relativ großen Bereich hinweg beansprucht. Bei wiederholter Herstellung einer solchen Klickverbindung kann es daher zu Ermüdungserscheinungen im Material kommen. Es ist daher auch eine Aufgabe der vorliegenden Erfindung, eine Haltervorrichtung bereitzustellen, bei welcher auch bei wiederholter Herstellung einer Klickverbindung zwischen der Haltervorrichtung und einer Montageschiene ein sicherer Halt gewährleistet wird.

Nach einem zweiten Aspekt der vorliegenden Erfindung, welcher von dem ersten Aspekt abhängen kann, für welchen aber alternativ auch eigenständiger Schutz begehrt wird, wird daher vorgeschlagen, dass bei der Haltervorrichtung der eingangs genannten Art der wenigstens eine erste Kopplungsabschnitt wenigstens ein Kopplungselement umfasst, welches geeignet ist, mit einem entsprechend ausgebildeten Gegenkopplungsabschnitt der Montageschiene eine Klickverbindung einzugehen, derart, dass sich während der Herstellung der Klickverbindung das erste Halterelement im Wesentlichen ausschließlich im Bereich des wenigstens einen ersten Kopplungsabschnitts verformt.

Durch das Vorsehen von dem wenigstens einen entsprechend ausgebildeten Kopplungselement an dem wenigstens einen ersten Kopplungsabschnitt werden die zur Herstellung der Klickverbindung benötigten Verformungen relativ klein gehalten und beschränken sich im Wesentlichen auf den Bereich des wenigstens einen ersten Kopplungsabschnitts, das heißt auf den Bereich des wenigstens einen ersten Halterelements, der bei der Herstellung der Klickverbindung mit der Montageschiene tatsächlich mit der Montageschiene in Eingriff gelangt, etwa indem er in eine Längsnut der Montageschiene eingeführt wird. Somit ist es nicht notwendig, wie dies aus dem Stand der Technik bekannt ist, die gesamten Schenkel eines im Wesentlichen U-förmig ausgebildeten ersten Halterelements für die Herstellung der Klickverbindung auseinander zu spreizen.

Gemäß einer ersten Ausführungsform der vorliegenden Erfindung ist das wenigstens eine Kopplungselement elastisch mit dem wenigstens einen ersten Kopplungsabschnitt verbunden. Auf diese Weise findet die Verformung lediglich als Relativbewegung zwischen dem Kopplungselement und dem dazugehörigen ersten Kopplungsabschnitt statt.

Für einen besonders sicheren Halt und für den eher unwahrscheinlichen Fall, dass ein elastisches Kopplungselement wegen Materialermüdung doch einmal versagt, wird vorgeschlagen, dass der wenigstens eine erste Kopplungsabschnitt eine Mehrzahl von Kopplungselementen umfasst. Hierbei kann es von Vorteil sein, wenn jedes der elastischen Kopplungselemente des wenigstens einen ersten Kopplungsabschnitts im Wesentlichen flächig ausgebildet ist, wobei wenigstens zwei der Kopplungselemente in zueinander weder parallelen noch identischen Ebenen liegen. Die Kopplungselemente können dabei wie Widerhaken eines Pfeils von dem jeweiligen ersten Kopplungsabschnitt des ersten Halterelements abstehen.

Insbesondere ist es möglich, dass - bei Betrachtung orthogonal zu einer ersten Bezugsebene - die wenigstens zwei in zueinander weder parallelen noch identischen Ebenen verlaufenden Kopplungselemente eine V-förmige Anordnung bilden, wobei die Spitze der V-Form zu einem freien Rand des wenigstens einen ersten Kopplungsabschnitts hinweist. Die erste Bezugsebene ist dabei als eine Ebene definiert, welche orthogonal zu einer Längserstreckungsrichtung der Montageschiene ausgerichtet ist, wenn die Klickverbindung zwischen dem ersten Halterelement und der Montageschiene hergestellt ist.

Bilden dabei zwei in Längserstreckungsrichtung der Montageschiene - wenn die Klickverbindung zwischen dem ersten Halterelement und der Montageschiene hergestellt ist - unmittelbar benachbarte Kopplungselemente eine entsprechende V-förmige Anordnung, so kann die Kraft über die gesamte Länge des wenigstens einen ersten Kopplungsabschnitts hinweg in Längserstreckungsrichtung der Montageschiene relativ gleichmäßig in die Montageschiene eingeleitet werden.

Gemäß einer zweiten, gegenüber der ersten stärker bevorzugten Ausführungsform der vorliegenden Erfindung kann vorgesehen sein, dass das wenigstens eine Kopplungselement halbmondförmig ausgebildet ist. Mit "halbmondförmig" ist dabei gemeint, dass das wenigstens eine Kopplungselement die Form einer halbierten Schale bzw. einer viertel Kugel aufweist, so dass es - von oben betrachtet - wie ein Halbmond aussieht. Sollte das erste Halterelement als Stanz-Biege-Teil aus einem Stück Blech ausgebildet sein, so kann das halbmondförmige Kopplungselement bevorzugt dadurch hergestellt werden, dass das Blech mit einem geraden Schnitt versehen wird und anschließend auf einer Seiten vom Schnitt nach außen gedrückt wird, so dass es in diesem Bereich die Halbmondform annimmt. Bei diesem Umformungsvorgang macht man sich die Fließeigenschaften des Materials zu Nutze. Der halbmondförmige freie Rand des wenigstens einen Kopplungselements kann sich bei der Herstellung einer Klickverbindung mit einer Montageschiene an einer hierfür vorgesehenen Fläche der Montageschiene abstützen. Das wenigstens eine Kopplungselement dient somit als eine Art Widerhaken.

Alternativ oder zusätzlich kann bei der zweiten Ausführungsform vorgesehen sein, dass der wenigstens eine erste Kopplungsabschnitt eine Mehrzahl von Kopplungselementen umfasst, welche im Wesentlichen unelastisch mit dem wenigstens einen ersten Kopplungsabschnitt verbunden sind, und welche in einer Richtung orthogonal zu der oben genannten ersten Bezugsebene mit Abstand zueinander angeordnet sind, wobei vorzugsweise wenigstens zwei Kopplungselemente von dem wenigstens einen ersten Kopplungsabschnitt in im Wesentlichen entgegen gesetzten Richtungen abstehen. Hierdurch wird erreicht, dass sich der wenigstens eine erste Kopplungsabschnitt bei der Herstellung einer Klickverbindung mit einer Montageschiene elastisch verformt, wohingegen die an ihm vorgesehenen, im Wesentlichen unelastischen Kopplungselemente im Wesentlichen unverformt bleiben. Wenn wenigstens zwei Kopplungselemente von dem wenigstens einen ersten Kopplungsabschnitt in im Wesentlichen entgegengesetzten Richtungen abstehen, kann sich der normalerweise geradlinig und orthogonal zu der ersten Bezugsebene erstreckende erste Kopplungsabschnitt schlangenlinienartig während der Herstellung der Klick-verbindung verformen. Dies trifft besonders dann zu, wenn sich die Kopplungselemente alternierend mal auf die eine Seite und mal auf die andere Seite des wenigstens einen ersten Kopplungsabschnitts erstrecken.

Dann, wenn das erste Halterelement - bei Betrachtung orthogonal zu der oben genannten ersten Bezugsebene - im Wesentlichen U-förmig ausgebildet ist, kann daran gedacht werden, dass die freien Längsenden der beiden Schenkel des U-förmig ausgebildeten ersten Halterelements jeweils einen ersten Kopplungsabschnitt aufweisen. Somit kann die im Endmontagezustand von dem zweiten Halterelement auf das erste Halterelement ausgeübte Zugkraft gleichmäßig über beide Schenkel des U-förmig ausgebildeten ersten Halterelements in die Montageschiene geleitet werden.

Um Material- und Fertigungskosten gering zu halten, wird ferner vorgeschlagen, dass das wenigstens eine Kopplungselement integral mit dem restlichen ersten Halterelement ausgebildet ist, welches vorzugsweise als Stanz-Biege-Teil ausgebildet ist.

Nach einem dritten Aspekt betrifft die Erfindung eine Montageschiene, umfassend wenigstens eine in Längserstreckungsrichtung der Montageschiene verlaufende Längsnut mit zwei sich im Wesentlichen parallel erstreckenden Innenseitenwänden, wobei die Längsnut einen Gegenkopplungsabschnitt für eine Klickverbindung mit einem ersten Kopplungsabschnitt der Haltervorrichtung nach dem zweiten Aspekt der Erfindung umfasst. Mit einer derartigen Montageschiene kann eine sichere Verbindung zwischen Montageschiene und Halteranordnung erzielt werden.

Ist das erste Halterelement, wie oben vorgeschlagen, im Wesentlichen U-förmig ausgebildet ist, wobei die freien Längsenden der beiden Schenkel des U-förmig ausgebildeten ersten Halterelements jeweils einen ersten Kopplungsabschnitt aufweisen, so umfasst vorzugsweise auch die Montageschiene zwei zueinander mit Abstand angeordnete, sich parallel erstreckende Längsnuten, welche geeignet sind, jeweils mit einem der beiden ersten Kopplungsabschnitte der Haltervorrichtung eine Rastverbindung einzugehen.

Um dem wenigsten einen Halterelement an der Montageschiene einen sicheren Halt zu bieten, wird vorgeschlagen, dass die wenigstens eine Längsnut an einer ihrer beiden Innenseitenwänden, vorzugsweise an beiden Innenseitenwänden, einen nach innen weisenden Vorsprungabschnitt umfasst, welcher Teil des Gegenkopplungsabschnitts ist.

Nach einem vierten Aspekt betrifft die Erfindung ferner ein Montagesystem, umfassend eine Haltervorrichtung nach dem zweiten Aspekt und eine Montageschiene nach dem dritten Aspekt, wobei der wenigstens eine erste Kopplungsabschnitt des ersten Halterelements und der wenigstens eine Gegenkopplungsabschnitt der Montageschiene derart relativ zueinander dimensioniert sind, dass im verrasteten Zustand der beiden Teile eine Schwenkbewegung des ersten Halterelements relativ zu der Montageschiene in einem vorbestimmten Umfang um eine zu den Innenseitenwänden der wenigstens einen Längsnut der Montageschiene orthogonalen Schwenkachse möglich ist. Hierdurch können der wenigstens eine erste Kopplungsabschnitt des ersten Halterelements und der wenigstens eine Gegenkopplungsabschnitt der Montageschiene zusammen wie eine Gelenkstelle wirken, die es erlaubt, dass sich beim Anziehen der Anzugsvorrichtung der Haltervorrichtung die erste und die zweite Haupterstreckungsrichtungen immer weiter annähern, bis sie beide im Wesentlichen orthogonal zu der Längserstreckungsrichtung der Montageschiene ausgerichtet sind, d.h. der "Knick" verschwunden ist.

Die Erfindung wird nachfolgend anhand eines in den Figuren dargestellten Ausführungsbeispiels näher erläutert. Es stellen dar:
- Fig. 1A - 1D:: verschiedene Ansichten einer ersten Ausführungsform eines ersten Halterelements der erfindungsgemäßen Haltervorrichtung,
- Fig. 2A - 2B:: verschiedene Ansichten eines zweiten Halterelements der erfindungsgemäßen Haltervorrichtung,
- Fig. 3A - 3C:: die erfindungsgemäße Haltervorrichtung, umfassend das erste und das zweite Halterelement,
- Fig. 4A - 4C:: verschiedene Ansichten einer erfindungsgemäßen Montageschiene,
- Fig. 5A - 5D:: Darstellungen, die die Verbindung zwischen der Haltervorrichtung umfassend das erste Halterelement gemäß der ersten Ausführungsform und der Montageschiene veranschaulichen,
- Fig. 6A - 6C:: Darstellungen, die veranschaulichen, wie ein Photovoltaikmodul von der mit der Montageschiene verbundenen Haltervorrichtung gehalten wird,
- Fig. 7A - 7D:: verschiedene Ansichten - ähnlich jenen in den Figuren 1A-1D - einer zweiten Ausführungsform eines ersten Halterelements der erfindungsgemäßen Haltervorrichtung,
- Fig. 8A - 8C:: Darstellungen, die die Verbindung zwischen der Haltervorrichtung umfassend das erste Halterelement gemäß der zweiten Ausführungsform und der Montageschiene veranschaulichen.

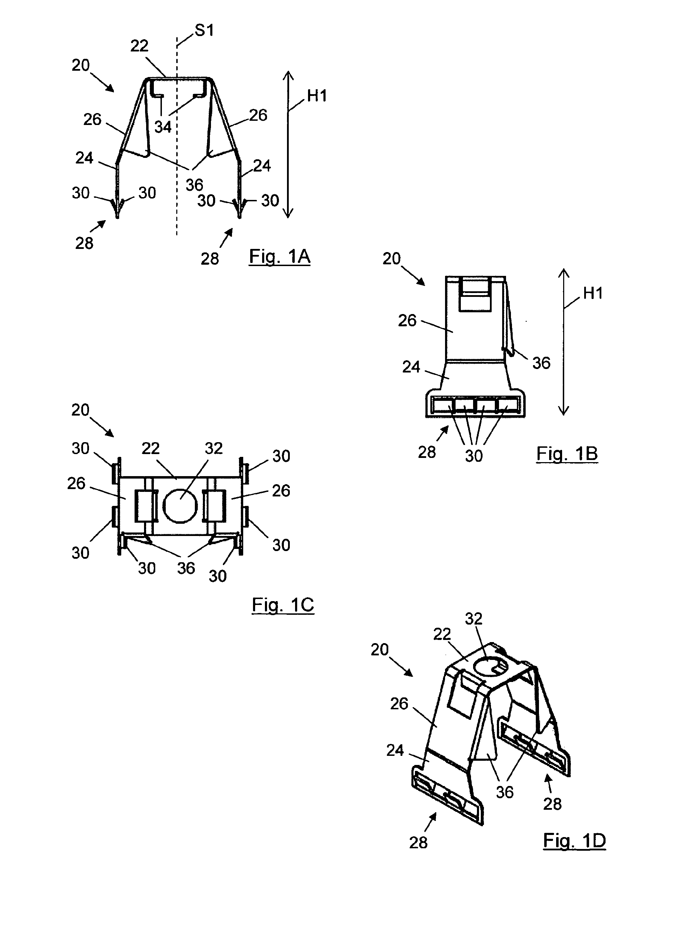

Die erfindungsgemäße Haltervorrichtung umfasst als wesentliche Komponenten zwei Halterelemente. Die Fig. 1A - 1D zeigen dabei verschiedene Ansichten des ersten Halterelements 20 gemäß einer ersten Ausführungsform, wobei Fig. 1A eine erste Seitenansicht, Fig. 1B eine zweite Seitenansicht in einer zur ersten Seitenansicht orthogonalen Blickrichtung, Fig. 1C eine Draufsicht von oben und Fig. 1D eine perspektivische Ansicht darstellt.

Wie insbesondere in Fig. 1A zu erkennen ist, weist das erste Halterelement 20 eine im Wesentlichen U-förmige, zu einer ersten Spiegelebene S1 symmetrische Gestalt auf, mit einem ersten zentralen Verbindungsabschnitt 22 und zwei sich parallel zueinander und orthogonal zu dem ersten Verbindungsabschnitt 22 erstreckenden ersten Schenkeln 24. Zudem ist auf jeder Seite der ersten Spiegelebene S1 jeweils ein Zwischenabschnitt 26 vorhanden, welcher zwischen dem ersten Verbindungsabschnitt 22 und dem jeweiligen ersten Schenkel 24 angeordnet ist und diese miteinander verbindet. Eine dem ersten Halterelement 20 zugeordnete erste Haupterstreckungsrichtung H1 verläuft parallel zu der ersten Spiegelebene S1 und zu den beiden ersten Schenkeln 24. Insbesondere entspricht die erste Haupterstreckungsrichtung H1 der vertikalen Richtung in den beiden Ansichten der Figuren 1A und 1B.

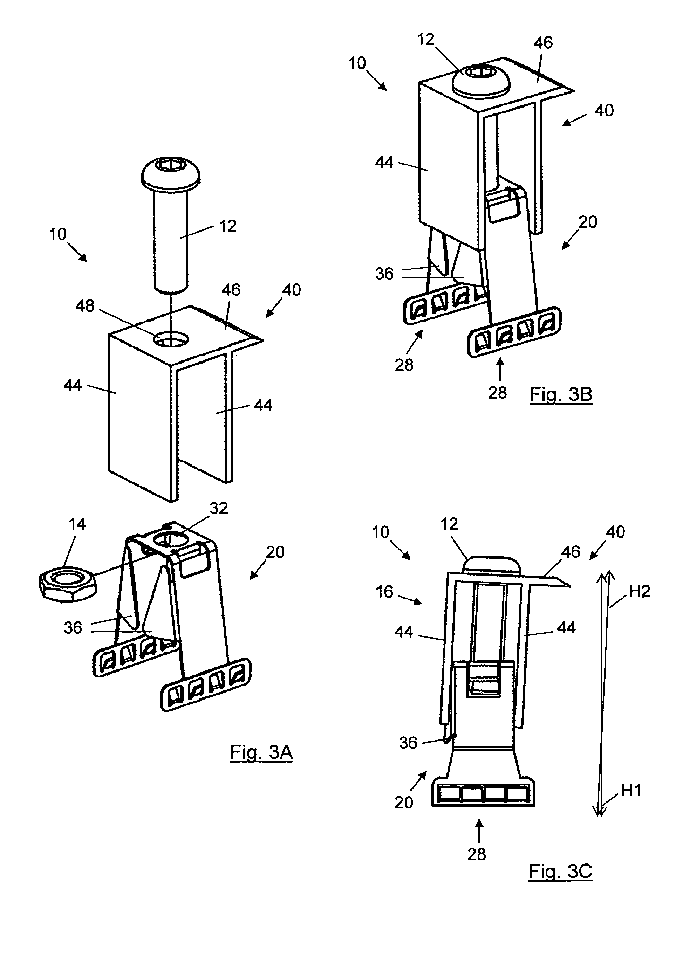

Im Bereich der beiden freien Enden seiner U-Form umfasst das erste Halterelement 20 jeweils einen ersten Kopplungsabschnitt 28, welche geeignet sind, mit entsprechenden Gegenkopplungsabschnitten einer nachfolgend noch näher beschriebenen Montageschiene in Kopplungseingriff zu gelangen bzw. zu stehen. Jeder von den beiden ersten Kopplungsabschnitten 28 umfasst ferner vier einzelne, flächig ausgebildete Kopplungselemente 30. Die Kopplungselemente 30 sind jeweils in einem dem freien Ende der U-Form des ersten Halterelements 20 zugewandten Abschnitt integral mit dem jeweiligen ersten Schenkel 24 elastisch verbunden und erstrecken sich, zumindest sofern keine äußeren Kräfte auf sie einwirken, in Ebenen, welche sich von der Ebene des jeweiligen ersten Schenkels 24 unterscheiden. Insbesondere stehen die Kopplungselemente 30 derart von dem jeweiligen ersten Schenkel 24 ab, dass sie in der in Fig. 1A gezeigten Seitenansicht V-förmig auseinandergespreizt sind, wobei zwei Kopplungselemente 30 links und die beiden anderen Kopplungselemente 30 rechts von dem jeweiligen ersten Schenkel 24 abstehen. Dabei weisen vorzugsweise, wie hier dargestellt, jeweils zwei unmittelbar benachbarte Kopplungselemente 30 in verschiedene Richtungen. Zwischen ihnen kann entweder nur ein schmaler Spalt vorgesehen sein, wie zum Beispiel in Fig. 1B gezeigt, oder alternativ ein Stegabschnitt des jeweiligen ersten Schenkels 24, wie zum Beispiel in den Figuren 3A und 3B gezeigt.

Im ersten zentralen Zwischenabschnitt 26 weist das erste Halterelement 20 zudem ein erstes kreisrundes Durchgangsloch 32 auf, durch welches ein Schraubbolzen geführt werden kann, wie nachfolgend noch näher beschrieben wird. In der in Fig. 1A dargestellten Ansicht befinden sich unterhalb des ersten Durchgangslochs 32, beidseits der ersten Spiegelebene S1, zwei abgewinkelte Fortsätze 34, welche zusammen einen Aufnahmeabschnitt zum verdrehsicheren Aufnehmen einer später noch näher beschriebenen Mutter bilden, welche mit dem Schraubbolzen in Gewindeeingriff gelangen bzw. stehen kann.

Ferner umfasst das erste Halterelement 20 noch zwei im Wesentlichen dreieckig ausgebildete Federelemente 36. Diese sind beidseits der ersten Spiegelebene S1 jeweils an einem Seitenrand eines Zwischenabschnitts 26 mit diesem elastisch verbunden. Die flächig ausgebildeten Federelemente 36 liegen dabei, zumindest sofern keine äußeren Kräfte auf sie einwirken, jeweils in einer Ebene, die zu der ersten Spiegelebene S1 weder parallel noch orthogonal orientiert ist. Bei Aufbringung äußerer Kräfte können die beiden Federelemente 36 jedoch elastisch derart verformt werden, dass sie im Wesentlichen in eine zu der ersten Spiegelebene S1 orthogonale Ebene gelangen.

Allgemein sei an dieser Stelle angemerkt, dass das erste Halterelement 20 vorzugsweise als Stanz-Biege-Teil, d.h. als ein durch Ausstanzen und Umbiegen gebildetes Bauteil, aus einem flachen Blech gefertigt ist. Auf diese Weise fallen wenig Einzelteile an, was eine sehr kostengünstige Herstellung in großer Stückzahl zulässt. Zudem kann man sich die elastischen Eigenschaften der Biegestellen im Blech bei Bedarf zu Nutze machen, wie dies hier zum Beispiel bei den Übergangsbereichen zwischen den Kopplungselementen 30 und dem jeweiligen ersten Schenkel 24 und bei den Übergangsbereichen zwischen den Federelementen 36 und den jeweiligen Zwischenabschnitten 26 der Fall ist.

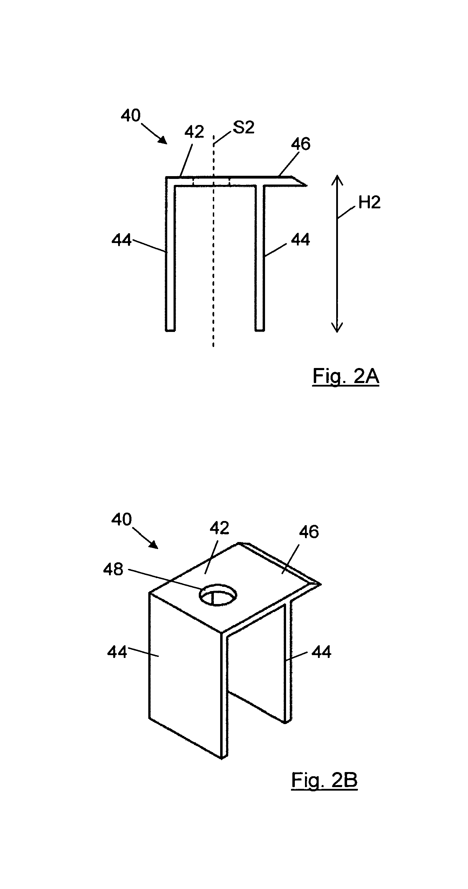

Das zweite Halterelement 40 ist in den Figuren 2A und 2B dargestellt, wobei Fig. 2A das zweite Halterelement 40 in einer Seitenansicht und Fig. 2B das zweite Halterelement 40 in einer perspektivischen Ansicht zeigt.

Ähnlich wie das erste Halterelement 20 weist auch das zweite Halterelement 40 eine im Wesentlichen U-förmige, zu einer zweiten Spiegelebene S2 im Wesentlichen symmetrische Gestalt auf, mit einem zweiten zentralen Verbindungsabschnitt 42 und zwei sich parallel zueinander auf gegenüberliegenden Seiten der zweiten Spiegelebene S2 und orthogonal zu dem zweiten Verbindungsabschnitt 42 erstreckenden zweiten Schenkeln 44. Wie insbesondere in der Fig. 2A deutlich zu erkennen ist, ist das zweite Halterelement zur zweiten Spiegelebene S2 jedoch nicht gänzlich symmetrisch, da sich ein Haltevorsprung 46 in der in der Fig. 2A gezeigten Seitenansicht nach rechts von dem zweiten Verbindungsabschnitt 42 erstreckt. Der Haltevorsprung 46 ist dabei geeignet, mit einem zu haltenden Photovoltaikmodul bzw. mit dessen Rahmen in Anlage zu gelangen bzw. zu stehen, um das Photovoltaikmodul zwischen sich und einer Montagescheine festzuklemmen, wie nachfolgend noch näher beschrieben wird. Der Haltevorsprung 46 bildet somit einen zweiten Kopplungsabschnitt der erfindungsgemäßen Haltervorrichtung 10. Ferner umfasst das zweite Halterelement 40 in seinem zweiten zentralen Verbindungsabschnitt 44 ein zweites kreisrundes Durchgangsloch 48, welches in Fig. 2A nur gestrichelt angedeutet ist.

Eine dem zweiten Halterelement 40 zugeordnete zweite Haupterstreckungsrichtung H2 verläuft parallel zu der zweiten Spiegelebene S2 und zu den beiden zweiten Schenkeln 44. Insbesondere entspricht die zweite Haupterstreckungsrichtung H2 der vertikalen Richtung in der Ansicht der Figur 2A.

Fig. 3A zeigt die Montage der erfindungsgemäßen Haltervorrichtung 10 unter Verwendung des ersten Halterelements 20, des zweiten Halterelements 40, eines Schraubbolzens 12 und einer Mutter 14. Hierzu wird die Mutter 14 zunächst in den durch die Fortsätze 34 gebildeten Aufnahmeabschnitt des ersten Halterelements 20 eingeschoben. Anschließend wird das zweite Halterelement 40 derart auf das erste Halterelement 20 von oben aufgesetzt, dass es letzteres zwischen seinen beiden zweiten Schenkeln 44, zumindest abschnittsweise, aufnimmt, wobei die Innenseite des zweiten Schenkels 44, der weiter von dem Haltevorsprung 46 entfernt ist als der andere zweite Schenkel 44, gleitend mit den beiden Federelementen 36 des ersten Halterelements 20 in Eingriff gelangt, wie in Fig. 3B gezeigt. Dann wird der Schraubbolzen 12 von oben mit seinem Gewindeabschnitt zunächst durch das zweite Durchgangsloch 48 im zweiten Halterelement 40 und dann durch das erste Durchgangsloch 32 im ersten Halterelement 20 geführt, bis das Außengewinde des Schraubbolzens 12 in Gewindeeingriff mit dem Innengewinde der Mutter 14 gelangt. Der Schraubbolzen 12 und die Mutter 14 bilden zusammen eine Anzugsvorrichtung 16.

Der Durchmesser des ersten Durchgangslochs 32 ist, im Gegensatz zum Durchmesser des zweiten Durchgangslochs 48, um einiges größer als der Außendurchmesser des Gewindeabschnitts des Schraubbolzens 12. Ferner ist der Aufnahmeabschnitt am ersten Halterelement 20 derart ausgebildet, dass er zwar die Mutter 14 verdrehsicher aufnehmen kann, ihr aber gleichzeitig ein gewisses Spiel lässt, so dass die Mutter 14 in dem Aufnahmeabschnitt den Schraubbolzen 12, zumindest in gewissen Grenzen, um eine Achse, die in Blickrichtung der Ansicht von Fig. 3C verläuft, schwenkbar lagert. Wie insbesondere in Fig. 3C gut zu erkennen ist, sorgen die Federelemente 36 des ersten Halterelements 20, gegen welche die Innenoberfläche eines der beiden zweiten Schenkel 44 anliegt, dafür, dass das zweite Halterelement 40 gegenüber dem ersten Halterelement 20 um die zuvor genannte Achse leicht geschwenkt bzw. gekippt ist. Die erste Haupterstreckungsrichtung H1 weicht somit um einen bestimmten Winkelwert von der zweiten Haupterstreckungsrichtung H2 ab. Insbesondere wird das zweite Halterelement 40 gegenüber dem ersten Halterelement 20 so verkippt, dass der Haltevorsprung 46 leicht nach unten geneigt ist, wenn das erste Halterelement 20 mit seinen beiden ersten Kopplungsabschnitten 28 auf einem ebenen Untergrund steht, wie in Fig. 3C dargestellt.

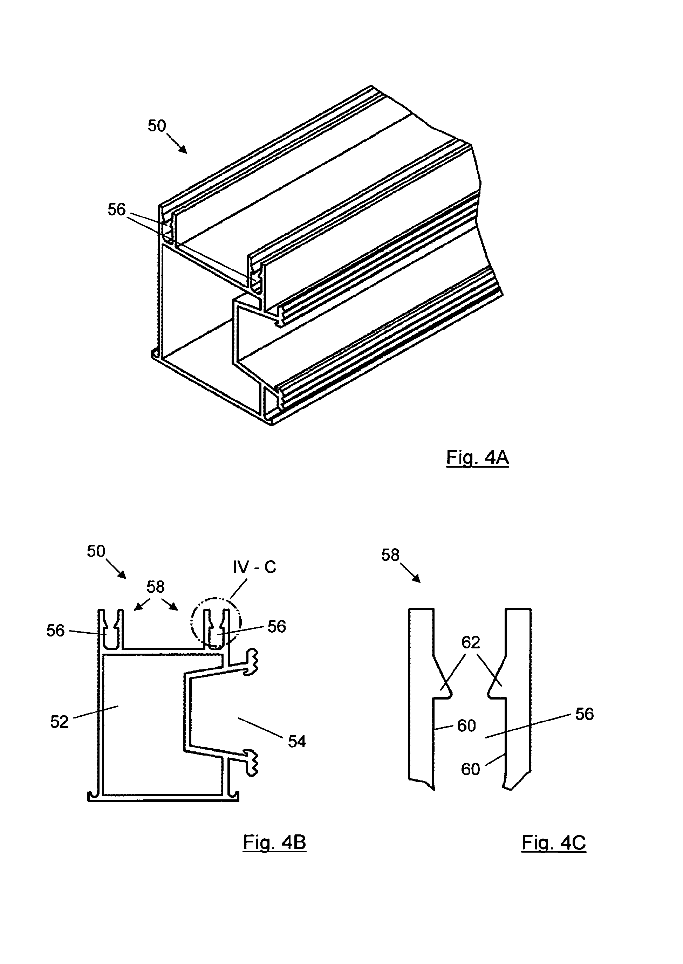

Fig. 4A zeigt eine perspektivische Ansicht eines Abschnitts einer erfindungsgemäßen Montageschiene 50. Die Montageschiene 50 ist vorzugsweise als Profilformteil ausgebildet, d.h. sie weist in jeder Schnittebene orthogonal zu ihrer Längserstreckungsrichtung denselben Querschnitt auf, welcher in Fig. 4B dargestellt ist. Neben einem geschlossenen Profilabschnitt 52, der für eine hohe strukturelle Steifigkeit der Montageschiene 50 sorgt, umfasst die Montageschiene 50 auch eine offene Montagenut 54, die zum Beispiel eine Dachhaken-Haltervorrichtung zum Halten der Montageschiene 50 an einem Dachhaken aufnehmen kann, wobei die Dachhaken-Haltervorrichtung hier jedoch nicht näher beschrieben werden soll.

Darüber hinaus umfasst die Montageschiene 50 ferner, wie im oberen Bereich der Fig. 4B zu erkennen ist, zwei sich parallel zueinander erstreckende offene Längsnuten 56, welche zwei Gegenkopplungsabschnitte 58 bilden bzw. umfassen. Die Gegenkopplungsabschnitte 58 sind dabei ausgebildet, um mit den beiden ersten Kopplungsabschnitten 28 der oben beschriebenen Haltervorrichtung 10 in Kopplungseingriff zu gelangen bzw. zu stehen. Insbesondere kann dieser Kopplungseingriff, wie nachfolgend noch näher erläutert wird, eine so genannte "Klickverbindung" sein.

Der rechte der beiden in Fig. 4B gezeigten Gegenkopplungsabschnitte 58 ist in Fig. 4C noch einmal vergrößert dargestellt, wobei die Darstellung und die dazu gehörige Beschreibung ebenso gut auch für den anderen der beiden Gegenkopplungsabschnitte 58 gelten, da beide Gegenkopplungsabschnitte 58 identisch ausgebildet sind. Die zu dem in Fig. 4C gezeigten Gegenkopplungsabschnitt 58 gehörige Längsnut 56 wird seitlich von zwei parallelen Innenseitenwänden 60 begrenzt. An sich gegenüberliegenden Stellen weisen die Innenseitenwände 60 jeweils einen Vorsprungabschnitt 62 auf, welcher von der Wand 60 zum Inneren der Nut 56 hin vorspringt. Jeder Vorsprungabschnitt weist wiederum einen der Öffnung der Längsnut 56 zugewandten ersten Oberflächenabschnitt auf, welcher in der Art einer Einführschräge gegenüber der Oberfläche der restlichen Innenseitenwand 60 geneigt ist, und einen dem Boden der Längsnut 56 zugewandten zweiten Oberflächenabschnitt, welcher im Wesentlichen orthogonal zu der restlichen Innenseitenwand 60 orientiert ist.

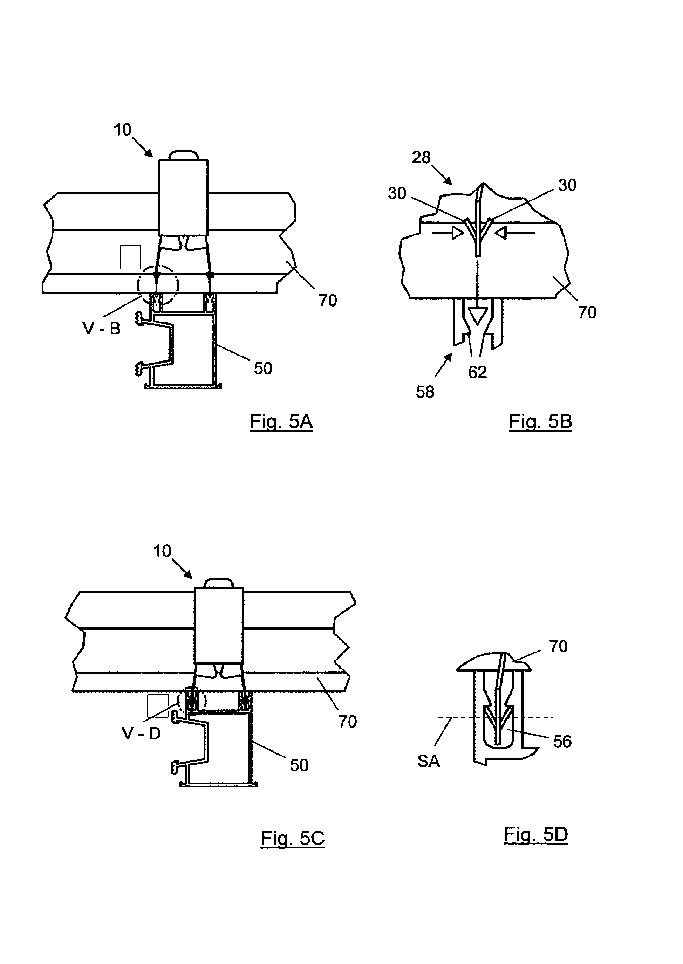

Wie man sich nunmehr leicht vorstellen kann, können die beiden ersten Kopplungsabschnitte 28 der Haltervorrichtung 10 durch die jeweiligen Öffnungen der beiden Längsnuten 56 der Montageschiene 50 eingeführt werden, um einen Kopplungszustand zwischen der Haltervorrichtung 10 und der Montageschiene 50 zu erzielen. Dies ist in den Figuren 5A bis 5D dargestellt, wobei Fig. 5A eine Situation vor dem Einführen der ersten Kopplungsabschnitte 28 in die entsprechenden Gegenkopplungsabschnitte 58 zeigt, Fig. 5B einen vergrößerten Ausschnitt aus der in Fig. 5A gezeigten Ansicht zeigt, Fig. 5C eine Situation nach dem Einführen der ersten Kopplungsabschnitte 28 in die entsprechenden Gegenkopplungsabschnitte 58 zeigt und Fig. 5D einen vergrößerten Ausschnitt aus der in Fig. 5C gezeigten Ansicht zeigt.

Wie in Fig. 5B durch Bewegungspfeile angedeutet ist, werden die V-förmig auseinander gespreizten Kopplungselemente 30 des ersten Kopplungsabschnitts 28 der Haltervorrichtung 10 aufeinander zu zusammengedrückt, wenn der erste Kopplungsabschnitt 28 in die offene Längsnut 56 der Montageschiene 50 eingeführt wird und die Kopplungselemente 30 dabei gleitend in Kontakt mit den beiden Vorsprungabschnitten 62 des Gegenkopplungsabschnitts 58 gelangen. Nachdem die Kopplungselemente 30 entlang des ersten Oberflächenabschnitts der beiden Vorsprungabschnitte 62 geglitten und dabei zusammengedrückt worden sind, können sie innerhalb der Längsnut 56, d.h. in einem Bereich zwischen den beiden Vorsprungabschnitten 62 und dem Boden der Längsnut 56, auf Grund ihrer elastischen Eigenschaften wieder in ihren Ausgangszustand zurückfedern. Hierbei kommt es zu einem vernehmlichen Klick-Geräusch, weswegen diese Art der Verbindung auch "Klick-Verbindung" genannt wird. Die Form der Vorsprungabschnitte 62 verhindert dabei, dass der erste Kopplungsabschnitt 28 wieder aus der offenen Längsnut 56 ungewollt herausrutschen kann. Gleichwohl ist es möglich, zumindest sofern keine Kräfte auf die Haltervorrichtung 10 wirken, selbige in Längsrichtung der Montageschiene 50 zu verschieben. Erfolgt diese Verschiebung über ein Längsende der Montageschiene hinaus, so kann der die Haltervorrichtung 10 wieder von der Montageschiene 50 separiert werden.

Der Vorteil dieser Klickverbindung liegt besonders darin, dass sich nicht die gesamten ersten Schenkel 24 - wobei hiermit auch die Zwischenabschnitte 26 gemeint sind - des ersten Halterelements 20 als solche verformen müssen, d.h. auseinander gespreizt werden, sondern dass sich die Verformung stattdessen nur in dem verhältnismäßig kleinem Bereich der Halterelemente 30 abspielt. Somit kommt es auch bei wiederholter Herstellung der Klickverbindung nur zu relativ geringer Materialermüdung.

Ferner sind die offene Längsnut 56 der Montageschiene 50 und der erste Kopplungsabschnitt 28 der Haltervorrichtung 10 derart dimensioniert, dass, zumindest innerhalb bestimmter Grenzen, eine leichte Schwenkbewegung des ersten Halterelements 20 der Haltervorrichtung 10 gegenüber der Montageschiene 50 um eine in Fig. 5D dargestellte Schwenkachse SA möglich ist. Die Schwenkachse SA verläuft dabei orthogonal zu der Längserstreckungsrichtung der Montageschiene 50 und parallel zu der Ebene eines zu haltenden Photovoltaikmoduls 70, welches in den Figuren 5A bis 5D nur als Ausschnitt angedeutet ist. Ferner verläuft die Schwenkachse SA auch orthogonal zu den Innenseitenwänden 60 der Längsnuten 56.

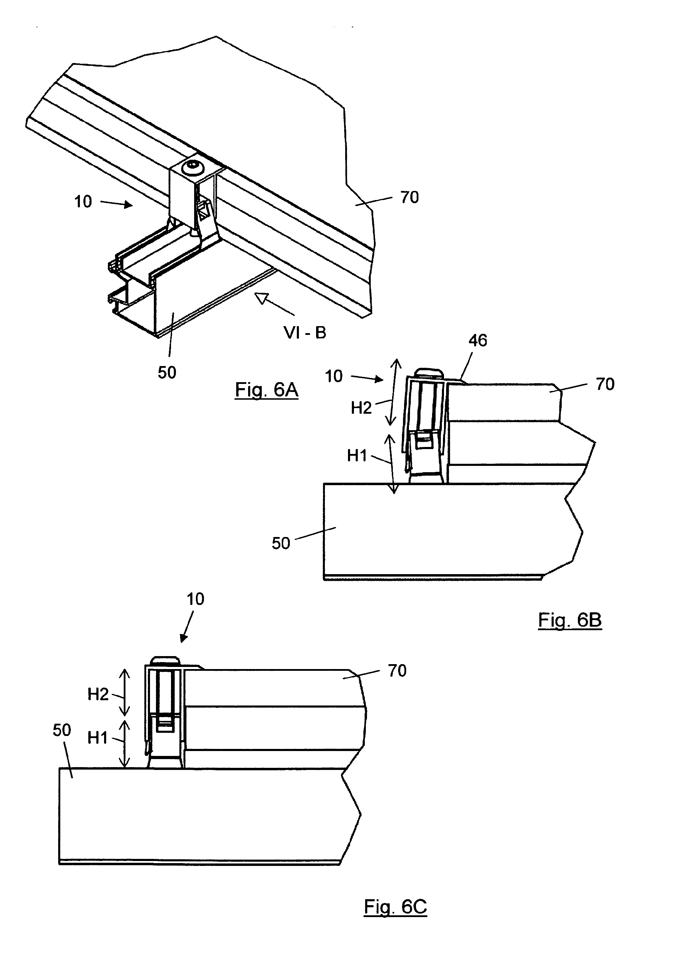

In den Figuren 6A bis 6C ist nunmehr veranschaulicht, wie sich ein Photovoltaikmodul 70 mit Hilfe der erfindungsgemäßen Haltervorrichtung 10 an einer Montageschiene 50 befestigen lässt. Fig. 6A zeigt eine perspektivische Ansicht der Haltervorrichtung 10, der Montageschiene 50 und des Photovoltaikmoduls 70 in einem Ausgangszustand. Fig. 6B ist eine Seitenansicht in der in Fig. 6A gezeigten perspektivischen Darstellung in Richtung des Betrachtungspfeils in Fig. 6A. Fig. 6C ist eine Seitenansicht, ähnlicher jener in Fig. 6B, jedoch in einem Endmontagezustand, bei welcher die Anzugsvorrichtung 16 fest angezogen ist.

In dem in den Figuren 6A und 6B gezeigten Ausgangszustand ist die Anzugsvorrichtung 10 bereits vormontiert, wie zuvor im Hinblick auf die Figuren 3A bis 3C erläutert worden ist, und mit seinen beiden ersten Kopplungsabschnitten 28 in die beiden offenen Längsnuten 56 der Montageschiene 50 unter Herstellung einer Klick-verbindung eingeschoben worden, wie zuvor im Hinblick auf die Figuren 5A bis 5D erläutert worden ist. Die aus dem Schraubbolzen 12 und der Mutter 14 gebildete Anzugsvorrichtung 16 ist in diesem Ausgangszustand nur lose, d.h. noch nicht fest angezogen. Ein Fußbereich der Haltervorrichtung 10, welcher im unteren Bereich bei den ersten Kopplungsabschnitten 28 angeordnet ist, ist im Wesentlichen bis an das zu haltende Photovoltaikmodul 70 heran geschoben. Gleichzeitig liegt der den zweiten Kopplungsabschnitt bildende Haltevorsprung 46 der Haltervorrichtung 10 bereits auf einem Rahmenabschnitt des zu haltenden Photovoltaikmoduls 70 auf. Da die Anzugsvorrichtung 16 jedoch im Ausgangszustand noch nicht fest angezogen ist, werden noch keine nennenswerte Kräfte von der Haltervorrichtung 10 auf das Photovoltaikmodul 70 übertragen, insbesondere noch keine Kräfte, die ausreichen, um das Photovoltaikmodul 70 sicher einzuklemmen. Gleichwohl sorgen die zwischen dem ersten Halterelement 20 und dem zweiten Halterelement 40 wirkenden Federelemente 36 für eine gewisse Vorspannung in der Haltervorrichtung 10. Insbesondere bewirken die Federelemente 36, dass das erste Halterelement 20 von dem zu haltenden Photovoltaikmodul 70 um die Schwenkachse SA weg gekippt ist, während das zweiter Halterelement 40 um eine durch die Mutter 14 gehende Achse wieder zu dem zu haltenden Photovoltaikmodul 70 hin gekippt ist. Die beiden Haupterstreckungsrichtungen H1 und H2 schließen somit einen Winkel ein, d.h. sie sind nicht parallel oder identisch.

Durch dieses gewünschte Verkippen der Haltervorrichtung 10 wird auf vorteilhafte Weise erreicht, dass die Haltervorrichtung 10 beim anschließenden Festziehen der Anzugsvorrichtung 16 nicht von dem zu haltenden Photovoltaikmodul 70 wegrutschen kann, selbst dann, wenn auf der gegenüberliegenden Seite kein weiteres Photovoltaikmodul vorhanden ist, welches als Gegenlager dienen könnte. Durch die von den Federelementen 36 erzeugte Vorspannung ist nämlich die Reibung, die zwischen den beiden ersten Kopplungsabschnitten 28 der Haltervorrichtung 10 und den entsprechenden Gegenkopplungsabschnitten 58 der Montageschiene 50 wirkt, sowie die Reibung, die zwischen dem zweiten Kopplungsabschnitt 46 und dem zu haltenden Photovoltaikmodul 70 wirkt, groß genug, um ein Wegrutschen der Haltervorrichtung 10 während des Festziehens der Anzugsvorrichtung zuverlässig zu verhindert.

Wird die Anzugsvorrichtung 16 der Haltervorrichtung 10 dann festgezogen, um den in Fig. 6C dargestellten Endmontagezustand zu erreichen, schwenkt das erste Halterelement 20 nur noch um die Schwenkachse SA und verschwenken die beiden Halterelemente 20 und 40 relativ zueinander, bis die beiden Haupterstreckungsrichtungen H1 und H2 im Wesentlichen identisch bzw. parallel zueinander sind. Man könnte daher auch einfach sagen, dass sich die Haltervorrichtung 10 beim Anziehen "aufrichtet".

Bei der erfindungsgemäßen Haltervorrichtung kann im Endmontagezustand der Kraftfluss zwischen Kopf- und Fußbereich im Wesentlichen geradlinig in Richtung der beiden Haupterstreckungsrichtungen H1 und H2 verlaufen. Ferner kann die Haltervorrichtung 10 auch in ihrem Fußbereich an dem zu haltenden Photovoltaikmodul 70 anliegen und dieses somit im bedingten Umfang auch an dieser Stelle unterstützen. Zudem erfolgt das Verschwenken und Gleiten der beiden Halterelemente 20 und 40 relativ zueinander während des Festziehens der Anzugsvorrichtung relativ verschleißfrei uns somit materialschonend.

Bei der folgenden Beschreibung der zweiten Ausführungsform des ersten Halterelements sind gegenüber der ersten Ausführungsform des ersten Halterelements strukturell oder funktional ähnliche oder identische Merkmale mit denselben Bezugszeichen versehen - jedoch zusätzlich mit einem Strich. Die Merkmale werden im Folgenden nur insoweit näher beschrieben, als sie sich von jenen der ersten Ausführungsform unterscheiden, auf deren Beschreibung hiermit ansonsten ausdrücklich verwiesen wird.

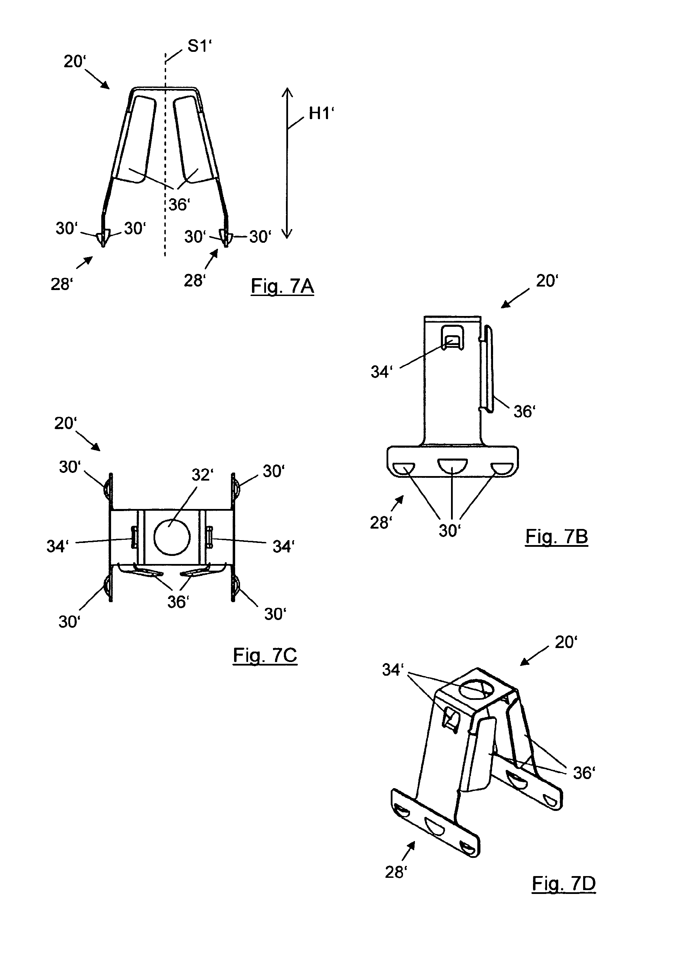

Die Figuren 7A - 7D zeigen - auf ganz ähnliche Weise wie die Figuren 1A-1D - verschiedene Ansichten des ersten Halterelements 20' gemäß einer zweiten Ausführungsform, wobei Fig. 7A eine erste Seitenansicht, Fig. 7B eine zweite Seitenansicht in einer zur ersten Seitenansicht orthogonalen Blickrichtung, Fig. 7C eine Draufsicht von oben und Fig. 7D eine perspektivische Ansicht darstellt. Die zweite Ausführungsform des ersten Halterelements 20' unterscheidet sich von der ersten Ausführungsform des ersten Halterelements 20 im Wesentlichen nur in drei Gesichtspunkten, welche voneinander völlig unabhängig sind.

Der erste Gesichtspunkt betrifft die Ausgestaltung der Fortsätze 34', welche zusammen den Aufnahmeabschnitt für die Mutter 14 bilden. Diese Fortsätze 34' sind im Vergleich zu den Fortsätzen 34 der ersten Ausführungsform fertigungstechnisch noch einfacher ausgebildet. Hierzu ist nämlich lediglich in den sich nach unten erstreckenden Seitenwänden des im Wesentlichen U-förmigen ersten Halterelements 20' jeweils ein Laschenabschnitt nach innen, d.h. zu der ersten Spiegelebene S1' hin, umgebogen. Jeder Fortsatz 34' muss dabei nur einmal gebogen werden, nämlich entlang seines unteren Randabschnitts, an welchem er mit dem restlichen ersten Halterelement 20' integral verbunden ist. Die beiden seitlichen Randabschnitte und der obere Randabschnitt von jedem Fortsatz 34' sind hingegen vom restlichen ersten Halterelement 20' freigeschnitten.

Der zweite Gesichtspunkt betrifft die Ausgestaltung der beiden Federelemente 36'. Diese sind, anders als bei der ersten Ausführungsform des ersten Halterelements 20, nicht dreieckig, sondern viereckig ausgebildet. Es könnten hier jedoch ebenso dreieckige oder anders gestaltete Federelemente verwendet werden.

Der dritte und wichtigste Gesichtspunkt betrifft die Ausgestaltung der beiden ersten Kopplungsabschnitte 28', die an den beiden freien Enden des im Wesentlichen U-förmigen erste Halterelement 20' vorgesehen sind. Anders als bei der ersten Ausführungsform sind an den beiden ersten Kopplungsabschnitte 28' der zweiten Ausführungsform die Kopplungselemente 30' nicht im Wesentlichen flach ausgebildet und elastisch mit dem jeweiligen ersten Schenkel verbunden. Vielmehr sind die Kopplungselemente 30' halbmondförmig ausgebildet und im Wesentlichen unelastisch mit dem jeweiligen restlichen ersten Kopplungsabschnitt 28' verbunden.

Mit "halbmondförmig" ist dabei gemeint, dass das Kopplungselement 30' die Form einer halbierten Schale bzw. viertel Kugel aufweist, so dass es - von oben betrachtet - wie ein Halbmond aussieht. Das erste Halterelement 20' ist vorzugsweise ebenfalls als Stanz-Biege-Teil aus einem Stück Blech ausgebildet. In diesem Fall kann das halbmondförmige Kopplungselement 30' bevorzugt dadurch hergestellt werden, dass das Blech mit einem geraden Schnitt versehen und anschließend auf einer Seite vom Schnitt - ggf. unter zur Hilfenahme eines entsprechenden Formwerkzeugs - nach außen gedrückt wird, so dass es in diesem Bereich die Halbmondform annimmt. Bei diesem Umformungsvorgang macht man sich die Fließeigenschaften des Materials zu Nutze. Der halbmondförmige freie Rand des Kopplungselements 30' dient bei der Herstellung der Klickverbindung mit einer Montageschiene 50 als eine Art Widerhaken.

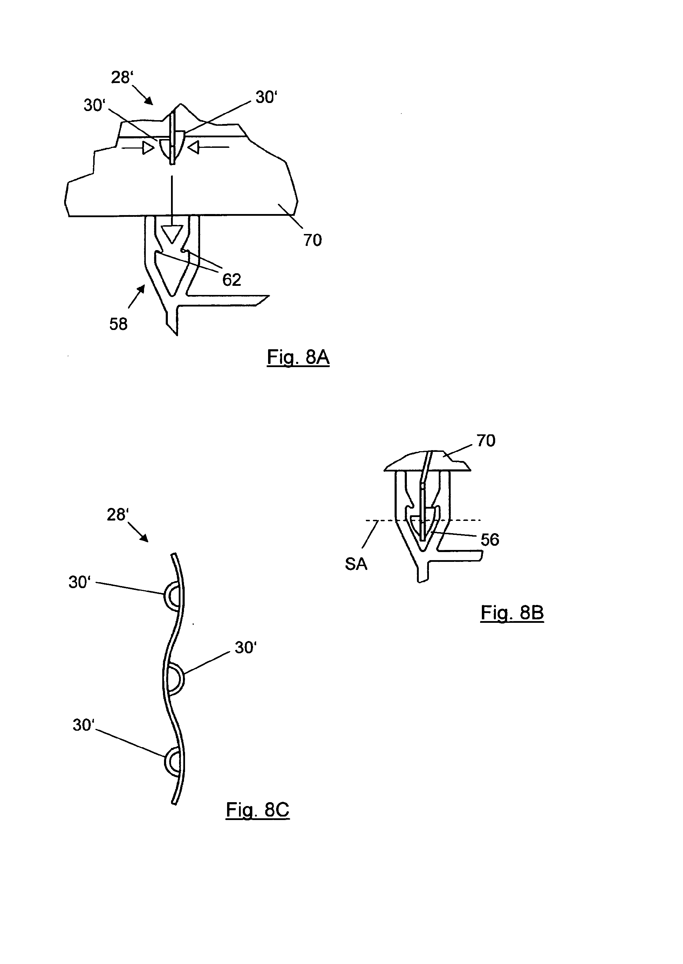

Im vorliegenden Beispiel umfasst jeder Kopplungsabschnitt 28' drei halbmondförmig ausgebildete Kopplungselemente 30', welche in Bezug auf die Längserstreckungsrichtung der Montageschiene 50 - wenn das erste Halterelement 20' mit der Montageschiene 50 gekoppelt ist - mit Abstand zueinander angeordnet sind. An jedem der beiden Kopplungsabschnitte 28' ist das mittlere Kopplungselement 30' etwas größer ausgebildet als die beiden äußeren Kopplungselemente 30'. Der obere Randabschnitt des mittleren Kopplungselements 30', an welchem das mittlere Kopplungselement 30' nicht integral mit dem jeweiligen restlichen ersten Kopplungsabschnitt 28' verbunden ist, ist dabei etwas weiter von dem freien Ende des jeweiligen Schenkels des im Wesentlichen U-förmig ausgebildeten ersten Halterelements 20' entfernt, als die oberen Randabschnitte der beiden äußeren Kopplungselemente 30'. Dies ermöglicht auf einfache Weise eine Schwenkbewegung des ersten Halterelements 20' relativ zu der Montageschiene 50 in einem vorbestimmten Umfang um die zu den Innenseitenwänden 60 der wenigstens einen Längsnut 56 der Montageschiene 50 orthogonalen Schwenkachse SA, wenn die beiden Teil 20' und 50 miteinander verrastet sind, wie dies in Figur 8B angedeutet ist.

Bei der zweiten Ausführungsform des ersten Halterelements 20' erstreckt sich das mittlere Kopplungselement 30' nach innen, zu der Spiegelebene S1' hin, wohingegen sich die beiden äußeren Kopplungselemente 30' nach außen, von der Spiegelebene S1' weg erstrecken. Es sei angemerkt, dass dies prinzipiell auch genauso gut umgekehrt sein könnte. Wichtig ist jedoch, dass sich - jeweils an einem Kopplungsabschnitt 28' - die Kopplungselemente 30' nicht alle in dieselbe Richtung erstrecken. Da die Kopplungselemente 30', wie oben beschrieben, im Wesentlichen unelastisch mit dem restlichen jeweiligen Kopplungsabschnitt 28' verbunden sind, würden sich der Kopplungsabschnitt 28' nämlich nicht in Form einer Klickverbindung in den entsprechenden Gegenkopplungsabschnitt 58 der Montageschiene 50 einführen lassen, zumindest nicht, ohne die Schenkel und/oder Zwischenabschnitte des im Wesentlichen U-förmig ausgebildeten ersten Halterelements 20' auseinanderzuspreizen oder zusammenzudrücken, wenn sich alle Kopplungselemente 30' an einem Kopplungsabschnitt 28' in dieselbe Richtung erstrecken würden. Da sich im vorliegenden Fall die Kopplungselemente 30' an einem Kopplungsabschnitt 28' jedoch in unterschiedliche, insbesondere in entgegengesetzte Richtungen erstrecken, kann sich während des Einführens des Kopplungsabschnitts 28' in den entsprechenden Gegenkopplungsabschnitt 58 der Montageschiene 50 schlangenlinienartig elastisch verformen, wie dies in Figur 8C dargestellt ist. Dabei bleiben die Kopplungselemente 30' im Wesentlichen unverformt. "Im Wesentlichen unverformt" bzw. "im Wesentlichen unelastisch" bedeutet hier, dass es an den Kopplungselementen 30' während der Herstellung der Klickverbindung mit der Montageschiene 50 zwar auch kleinere Verformungen geben kann, dass die hauptsächlich Verformung jedoch ganz überwiegend in den übrigen Bereichen des jeweiligen Kopplungsabschnitts 28' stattfindet. Nach dem Herstellen der Klickverbindung nehmen die Kopplungsabschnitte 28' auf Grund ihrer elastischen Eigenschaften wieder ihre unverformte Ausgangskonfiguration ein und garantieren somit einen sicheren Halt des ersten Halterelements 20' an der Montageschiene 50.

Die Figuren 8A und 8B zeigen Ansichten, die jenen in den Figuren 5B und 5D ganz ähnlich sind. In den Figuren 8A und 8B wird die Kopplung eines Kopplungsabschnitts 28' des ersten Halterelements 20' der zweiten Ausführungsform mit dem entsprechenden Gegenkopplungsabschnitt 56 der Montageschiene 50 veranschaulicht. Es sei angemerkt, dass es auch bei der zweiten Ausführungsform während der Herstellung dieser Kopplung bzw. der Klickverbindung mit der Montageschiene 50 zu keiner wesentlichen Verformung, d.h. zu keinem Aufspreizen oder Zusammendrücken, der beiden Schenkel und/oder Zwischenabschnitte des im Wesentlichen U-förmig ausgebildeten ersten Halterelements 20' kommt.

## Patentansprüche

1. Haltervorrichtung (10) zur Halterung eines Photovoltaikmoduls (70) an einer Montageschiene (50),
wobei:
- die Haltervorrichtung (10) ein erstes Halterelement (20; 20') mit einer ersten Haupterstreckungsrichtung (H1; H1′) und ein zweites Halterelement (40) mit einer zweiten Hauptersteckungsrichtung (H2) umfasst, sowie eine die beiden Halterelemente (20; 20', 40) verbindende Anzugsvorrichtung (16), welche ausgebildet ist, bei Betätigung die beiden Halterelemente (20; 20', 40) relativ zueinander zu bewegen,
- das erste Halterelement (20; 20') an einem in der ersten Haupterstreckungsrichtung (H1) dem zweiten Halterelement (40) entfernten Längsende wenigstens einen zur Kopplung mit einer Montageschiene (50) geeigneten ersten Kopplungsabschnitt (28) aufweist,
- das zweite Halterelement (40) an einem in der zweiten Haupterstreckungsrichtung (H2) dem ersten Halterelement (20) entfernten Längsende wenigstens einen zur Kopplung mit einem Photovoltaikmodul (70) geeigneten zweiten Kopplungsabschnitt (46) aufweist, und
- durch Betätigung der Anzugsvorrichtung (16) die Haltervorrichtung (10) von einem Ausgangszustand in einen Endmontagezustand überführbar ist,
**dadurch gekennzeichnet, dass** die Haltervorrichtung (10) ferner wenigstens ein zwischen den beiden Halterelementen (20; 20', 40) elastisch wirkendes Federelement (36; 36') umfasst, welches ausgebildet ist, im Ausgangszustand das erste Halterelement (20; 20') relativ zu dem zweiten Halterelement (40) derart zu verkippen, dass die erste Haupterstreckungsrichtung (H1; H1′) wenigstens um einen vorbestimmten Winkelwert von der zweiten Haupterstreckungsrichtung (H2) abweicht, wohingegen im Endmontagezustand die erste Haupterstreckungsrichtung (H1; H1′) und die zweite Haupterstreckungsrichtung (H2) im Wesentlichen identisch sind.

2. Haltervorrichtung (10) nach Anspruch 1,
**dadurch gekennzeichnet, dass** der zweite Kopplungsabschnitt (46) einen Haltevorsprung (46) umfasst, welcher sich in einer zu der zweiten Haupterstreckungsrichtung (H2) im Wesentlichen orthogonalen Ebene in Richtung auf das zu haltende Photovoltaikmodul (70) hin erstreckt, und welcher angepasst ist, das Photovoltaikmodul (70), zumindest im Endmontagezustand, gegen die Montageschiene (70) zu drücken.

3. Haltervorrichtung (10) nach Anspruch 2,
**dadurch gekennzeichnet, dass** das wenigstens eine Federelement (36; 36') derart ausgebildet ist, dass im Ausgangszustand der Haltevorsprung (46) in Richtung auf das zu haltende Photovoltaikmodul (70) hin gekippt ist.

4. Haltervorrichtung (10) nach einem der vorhergehenden Ansprüche,
**dadurch gekennzeichnet, dass** die Anzugsvorrichtung (16) einen Schraubbolzen (12) und einen mit einem Außengewinde des Schraubbolzens (12) in Gewindeeingriff stehenden Innengewindeabschnitt aufweist.

5. Haltervorrichtung (10) nach Anspruch 4,
**dadurch gekennzeichnet, dass** eines (20; 20') der beiden Halterelemente (20; 20', 40) einen, vorzugsweise integral damit ausgebildeten, Aufnahmeabschnitt (34; 34') zum verdrehsicheren Aufnehmen einer den Innengewindeabschnitt aufweisenden Mutter (14) umfasst, und dass das andere (40) der beiden Halterelementen (20; 20', 40) ein von dem Schraubbolzen (12) durchsetztes Durchgangsloch (48) aufweist.

6. Haltervorrichtung (10) nach einem der vorhergehenden Ansprüche,
**dadurch gekennzeichnet, dass** das erste Halterelement (20; 20') bei Betrachtung orthogonal zu einer ersten Bezugsebene, welche parallel zu der ersten Haupterstreckungsrichtung (H1; H1') ist, im Wesentlichen U-förmig ausgebildet ist.

7. Haltervorrichtung (10) nach einem der vorhergehenden Ansprüche,
**dadurch gekennzeichnet, dass** das zweite Halterelement (40) bei Betrachtung orthogonal zu einer zweiten Bezugsebene, welche parallel zu der zweiten Haupterstreckungsrichtung (H2) ist, im Wesentlichen U-förmig ausgebildet ist.

8. Haltervorrichtung (10) nach Anspruch 6 und 7,
**dadurch gekennzeichnet, dass** im Endmontagezustand die erste Bezugsebene im Wesentlichen orthogonal zu der zweiten Bezugsebene ausgerichtet ist.

9. Haltervorrichtung (10) nach einem der Ansprüche 6 bis 8,
**dadurch gekennzeichnet, dass** das wenigstens eine Federelement (36; 36') im Wesentlichen flächig ausgebildet und mit dem restlichen ersten oder zweiten Halterelement (20; 20', 40) derart beweglich verbunden ist, dass es sich im Endmontagezustand, anders als im Ausgangszustand, in einer zu der ersten bzw. zweiten Bezugsebene im Wesentlichen identischen oder parallelen Ebene erstreckt.

10. Haltervorrichtung (10) nach einem der Ansprüche 6 bis 9,
**dadurch gekennzeichnet, dass** jedem der beiden Schenkel (24) des U-förmigen ersten oder zweiten Halterelements (20; 20', 40) jeweils ein Federelement (36; 36') zugeordnet ist.

11. Haltervorrichtung (10) nach einem der vorhergehenden Ansprüche,
**dadurch gekennzeichnet, dass** das wenigstens eine Federelement (36; 36') integral mit einem der beiden Halterelemente (20; 20', 40), vorzugsweise mit dem ersten Halterelement (20; 20'), verbunden ist.

12. Haltervorrichtung (10) nach Anspruch 11,
**dadurch gekennzeichnet, dass** das das wenigstens eine Federelement (36; 36') aufweisende Halterelement (20; 20') der beiden Halterelemente (20; 20', 40) als metallisches Stanz-Biege-Teil ausgebildet ist.

13. Haltervorrichtung (10) nach dem Oberbergriff von Anspruch 1, und gewünschtenfalls ferner nach wenigstens einem Kennzeichen der vorhergehenden Ansprüche,
**dadurch gekennzeichnet, dass** der wenigstens eine erste Kopplungsabschnitt (28; 28') wenigstens ein Kopplungselement (30; 30') umfasst, welches geeignet ist, mit einem entsprechend ausgebildeten Gegenkopplungsabschnitt (58) der Montageschiene (50) eine Klickverbindung einzugehen, derart, dass sich während der Herstellung der Klickverbindung das erste Halterelement (20; 20') im Wesentlichen ausschließlich im Bereich des wenigstens einen ersten Kopplungsabschnitts (28; 28') verformt.

14. Haltervorrichtung (10) nach Anspruch 13,
**dadurch gekennzeichnet, dass** das wenigstens eine Kopplungselement (30) elastisch mit dem wenigstens einen ersten Kopplungsabschnitt verbunden ist.

15. Haltervorrichtung (10) nach Anspruch 14,
**dadurch gekennzeichnet, dass** der wenigstens eine erste Kopplungsabschnitt (28) eine Mehrzahl von Kopplungselementen (30) umfasst, von denen jedes im Wesentlichen flächig ausgebildet ist, wobei wenigstens zwei der Kopplungselemente (30) in zueinander weder parallelen noch identischen Ebenen liegen.

16. Haltervorrichtung (10) nach Anspruch 15,
**dadurch gekennzeichnet, dass** bei Betrachtung orthogonal zu einer bzw. der ersten Bezugsebene, welche orthogonal zu einer Längserstreckungsrichtung der Montageschiene (50) ausgerichtet ist, wenn die Klickverbindung zwischen dem ersten Halterelement (20) und der Montageschiene (50) hergestellt ist, die wenigstens zwei in zueinander weder parallelen noch identischen Ebenen verlaufenden Kopplungselemente (30) eine V-förmige Anordnung bilden, wobei die Spitze der V-Form zu einem freien Rand des wenigstens einen ersten Kopplungsabschnitts (28) hinweist.

17. Haltervorrichtung (10) nach Anspruch 16,
**dadurch gekennzeichnet, dass** jeweils zwei in Längserstreckungsrichtung der Montageschiene (50), wenn die Klickverbindung zwischen dem ersten Halterelement (20) und der Montageschiene (50) hergestellt ist, unmittelbar benachbarte Kopplungselemente (30) eine entsprechende V-förmige Anordnung bilden.

18. Haltervorrichtung (10) nach Anspruch 13,
**dadurch gekennzeichnet, dass** das wenigstens eine Kopplungselement (30') halbmondförmig ausgebildet ist.

19. Haltervorrichtung (10) nach Anspruch 13 oder 18,
**dadurch gekennzeichnet, dass** der wenigstens eine erste Kopplungsabschnitt (28') eine Mehrzahl von Kopplungselementen (30') umfasst, welche im Wesentlichen unelastisch mit dem wenigstens einen ersten Kopplungsabschnitt (28') verbunden sind, und welche in einer Richtung orthogonal zu einer bzw. der ersten Bezugsebene, welche orthogonal zu einer Längserstreckungsrichtung der Montageschiene (50) ausgerichtet ist, wenn die Klickverbindung zwischen dem ersten Halterelement (20) und der Montageschiene (50) hergestellt ist, mit Abstand zueinander angeordnet sind, wobei vorzugsweise wenigstens zwei Kopplungselemente (30') von dem wenigstens einen ersten Kopplungsabschnitt (28') in im Wesentlichen entgegen gesetzten Richtungen abstehen.

20. Haltervorrichtung (10) nach einem der Ansprüche 13 bis 19,
**dadurch gekennzeichnet, dass** das erste Halterelement (20; 20') bei Betrachtung orthogonal zu einer bzw. der ersten Bezugsebene, welche orthogonal zu einer Längserstreckungsrichtung der Montageschiene (50) ausgerichtet ist, wenn die Klickverbindung zwischen dem ersten Halterelement (20; 20') und der Montageschiene (50) hergestellt ist, im Wesentlichen U-förmig ausgebildet ist, wobei die freien Längsenden der beiden Schenkel des U-förmig ausgebildeten ersten Halterelements (20; 20') jeweils einen ersten Kopplungsabschnitt (28; 28') aufweisen.

21. Haltervorrichtung nach (10) einem der Ansprüche 13 bis 20,
**dadurch gekennzeichnet, dass** das wenigstens eine Kopplungselement (30; 30') integral mit dem restlichen ersten Halterelement (20; 20') ausgebildet ist, welches vorzugsweise als Stanz-Biege-Teil ausgebildet ist.

22. Montageschiene (50),
**gekennzeichnet durch** wenigstens eine in Längserstreckungsrichtung der Montageschiene (50) verlaufende Längsnut (56) mit zwei sich im Wesentlichen parallel erstreckenden Innenseitenwänden (60), wobei die Längsnut (56) einen Gegenkopplungsabschnitt (58) für eine Klickverbindung mit einem ersten Kopplungsabschnitt (28; 28') der Haltervorrichtung (10) nach einem der Ansprüche 13 bis 21 umfasst.

23. Montageschiene (50) nach Anspruch 22,
**gekennzeichnet durch** zwei zueinander mit Abstand angeordnete, sich parallel erstreckende Längsnuten (56), welche geeignet sind, jeweils mit einem der beiden ersten Kopplungsabschnitte (28; 28') der Haltervorrichtung (10) nach Anspruch 14 eine Klickverbindung einzugehen.

24. Montageschiene (50) nach Anspruch 22 oder 23,
**dadurch gekennzeichnet, dass** die wenigstens eine Längsnut (56) an einer ihrer beiden Innenseitenwänden (60), vorzugsweise an beiden Innenseitenwänden (60), einen nach innen weisenden Vorsprungabschnitt (62) umfasst, welcher Teil des Gegenkopplungsabschnitts (58) ist.

25. Montagesystem (50), umfassend eine Haltervorrichtung (10) nach einem der Ansprüche 13 bis 21 und eine Montageschiene (50) nach einem der Ansprüche 22 bis 24,
**dadurch gekennzeichnet, dass** der wenigstens eine erste Kopplungsabschnitt (28; 28') des ersten Halterelements (20; 20') und der wenigstens eine Gegenkopplungsabschnitt (58) der Montageschiene (50) derart relativ zueinander dimensioniert sind, dass im verrasteten Zustand der beiden Teile (20; 20', 50) eine Schwenkbewegung des ersten Halterelements (20; 20') relativ zu der Montageschiene (50) in einem vorbestimmten Umfang um eine zu den Innenseitenwänden (60) der wenigstens einen Längsnut (56) der Montageschiene (50) orthogonalen Schwenkachse (SA) möglich ist.
